# EUROPEAN PATENT APPLICATION

(11) **EP 2 325 142 A1**
(43) Date of publication of application: **25.05.2011**
(21) Application number: 09814413.2
(22) Date of filing: 11.08.2009
(51) Int. Cl.: C01B 33/40, B01J 20/12, C11B 3/10

(54) **NOVEL ACTIVATED CLAY AND BLEACHING AGENT FOR ANIMAL OR VEGETABLE FATS OR OILS OR MINERAL OILS**

(30) Priority: 18.09.2008 JP 2008239302
(71) Applicant: Mizusawa Industrial Chemicals Ltd., Chuo-ku Tokyo 103-0023 (JP)
(72) Inventor: HATANO, Masashi, Chuo-ku, Tokyo 1030023 (JP); DEMURA, Mitsuru, Chuo-ku, Tokyo 1030023 (JP); YAMAZAKI, Yoshihiro, Chuo-ku, Tokyo 1030023 (JP)
(74) Representative: Benson, John Everett
(86) International application number: PCT/JP2009/064194
(87) International publication number: WO 2010/032568

(57) **Abstract**

[Problems] To provide a novel active clay having superior decolorizing performance to the conventional active clays and a decolorizing agent comprising the active clay for animal and plant fats and oils or for mineral oils.

[Means for Solution] The active clay has a porous volume of 0.40 to 0.60 cm³/g with porous sizes of 1.7 to 100 nm as measured by the nitrogen adsorption method, a porous volume ratio (B/A) of the porous volume (A) with porous sizes of 1.7 to 11.5 nm and the porous volume (B) with porous sizes of not smaller than 11.5 nm but not larger than 100 nm in a range of 0.75 to 1.5, and an amount of solid acid of Ho ≦ -3.0 in a range of 0.15 to 0.40 mmols/g.

## Description

### Technical Field:

This invention relates to a decolorizing agent having a novel structure for animal and plant fats and oils or for mineral oils. More specifically, the invention relates to a decolorizing agent comprising an active clay.

### Background Art:

It has long been known that a clay comprising chiefly a dioctahedral smectite has decolorizing performance and in Great Britain, this clay has been called fuller's earth or bleaching earth.

It has also been known to activate a clay comprising chiefly the dioctahedral smectite by the treatment with an acid to increase the specific surface area and to use it as a decolorizing agent for animal and plant fats and oils and for mineral oils. A patent document 1 proposes an active clay obtained by treating a dioctahedral smectite clay mineral with an acid to adjust the crystal particle size so as to lie in a predetermined range, that is used as a decolorizing agent for animal and plant fats and oils and for mineral oils.

Further, a patent document 2 discloses an inorganic porous material having a sharp porous distribution in which most of the fine pores lie in a range of porous sizes of 30 to 50 Å (3.0 to 5.0 nm) obtained by acid-treating a montmorillonite clay mineral belonging to the dioctahedral smectite clay mineral.

On the other hand, the present inventors have previously proposed a decolorizing agent comprising an active clay having a porous volume of 0.35 to 0.40 cm³/g with porous sizes of 17 to 3000 Å (1.7 to 300 nm) (patent document 3).

Patent document 1: JP-A-11-157829
Patent document 2: JP-A-6-340413
Patent document 3: JP-A-2008-31411

### Outline of the Invention:

### Problems that the Invention is to Solve:

The active clay obtained by acid-treating the clay comprising chiefly the dioctahedral smectite exhibits excellent decolorizing performance for animal and plant fats and oils and for mineral oils because of the reason that an Al component and an Fe component elute out from the clay due to the acid-treatment, enabling the porous volume and the specific surface area to increase and, therefore, increasing performance for physically adsorbing coloring components such as chlorophyll. In particular, an increase in the porous volume of large pores contributes to greatly improving the decolorizing performance.

In addition to the porous volume and the specific surface area, further, the amount of solid acid serves as a factor for exhibiting decolorizing performance. As the amount of the solid acid increases, the reactivity increases for the coloring components, and the chemically adsorbing performance increases improving the decolorizing performance.

However, the active clay obtained by the acid-treatment as described above contains little Al component and Fe component since they elute out accompanying the acid-treatment. Therefore, though the porous volume and the BET specific surface area increase, the amount of the solid acid decreases. Therefore, the patent documents 1 to 3 face limit on improving the decolorizing performance relying solely upon increasing the porous volume by the acid-treatment. From the standpoint of the decolorizing performance, therefore, the active clay must have an increased porous volume of large sizes and an increased amount of the solid acid. However, the active clay having such properties has not been known yet.

It is, therefore, an object of the present invention to provide a novel active clay having superior decolorizing performance to the conventional active clays and a decolorizing agent comprising the active clay for animal and plant fats and oils or for mineral oils.

### Means for Solving the Problems:

The present inventors have conducted experiments extensively concerning the decolorizing performance of active clays, have discovered that a novel active clay having markedly improved decolorizing performance can be obtained if the active clay is treated with an alkali to a suitable degree followed by the washing with an acid, and have finished the present invention.

According to the present invention, there is provided an active clay having a porous volume of 0.40 to 0.60 cm³/g with porous sizes of 1.7 to 100 nm as measured by the nitrogen adsorption method, a porous volume ratio (B/A) of the porous volume (A) with porous sizes of 1.7 to 11.5 nm and the porous volume (B) with porous sizes of larger than 11. 5 nm but not larger than 100 nm in a range of 0.75 to 1.5, and an amount of solid acid of Ho ≦ -3.0 in a range of 0.15 to 0.40 mmols/g.
According to the present invention, there is further provided a decolorizing agent comprising the active clay for animal and plant fats and oils or for mineral oils.

It is desired that the active clay of the present invention:
(1) Has pH (25°C) in a range of 2.5 to 5.0 in an aqueous suspension of 5% by weight; and
(2) Has a BET specific surface area of 150 to 300 m²/g.

### Effects of the Invention:

The active clay of the invention has a porous volume of 0.40 to 0.60 cm³/g with porous sizes (porous diameters) of 1.7 to 100 nm. The active clay having the above porous volume has heretofore been known. According to the present invention, however, a distinguished feature resides in that the active clay has the porous volume as described above, a porous volume ratio (B/A) of the porous volume (A) with porous sizes of 1.7 to 11.5 nm and the porous volume (B) with porous sizes of larger than 11.5 nm but not larger than 100 nm in a range of 0.75 to 1.5, and an amount of solid acid of Ho ≦ -3.0 in a range of 0.15 to 0.40 mmols/g.

That is, the porous volume ratio (B/A) that lies in the above range means that pores of large sizes are much contained while the above amount of the solid acid means that the solid acid having a relatively large strength is much contained. It will, therefore, be understood that the active clay of the invention has a large porous volume like the conventional active clay but much contains pores of sizes larger than those of the conventional active clay and, further, much contains the solid acid having a relatively large strength, exhibiting improved performance for physically adsorbing coloring matter based on the pores as well as improved chemical adsorbing performance based on the solid acid. As a result, as demonstrated in Examples appearing later, the active clay of the invention exhibits very superior decolorizing performance to the conventional active clays.

The conventional active clays have simply been treated with an acid to increase the porous volume accompanied, therefore, by a decrease in the amount of the solid acid. Therefore, even if the above porous volume ratio (B/A) were satisfied, the amount of the solid acid is smaller than that of the active clay of the present invention. Accordingly, even if the coloring matter-adsorbing performance might have been improved relying on the pores, performance for adsorbing the coloring matter based on the solid acid is low. Therefore, excellent decolorizing performance as attained by the present invention is never realized.

As described above, the active clay of the invention exhibits markedly improved decolorizing performance, and can be preferably used as a decolorizing agent for fats, oils or for mineral oils.

### Brief Description of the Drawing:

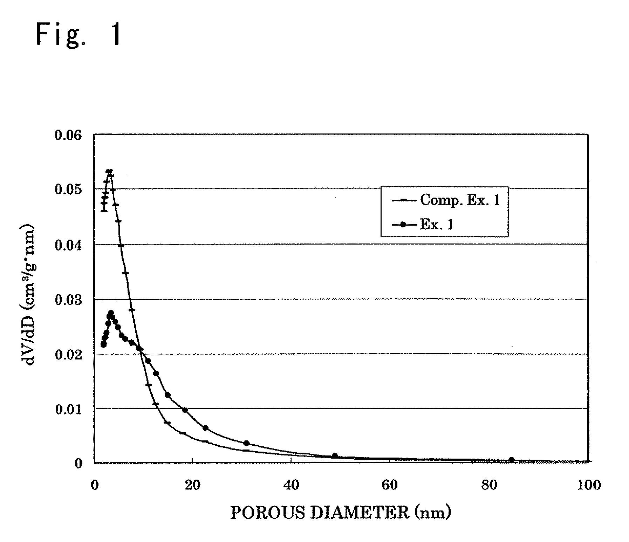

Fig. 1 is a diagram illustrating porous size distributions of an active clay (Example 1) of the present invention and of a conventional active clay (Comparative Example 1).

### Best Mode for Carrying Out the Invention:

### <Production of the active clay>

The active clay of the invention is obtained by using, as a starting material, a clay chiefly comprising a dioctahedral smectite which is treated with an acid (corresponds to a conventional active clay), treating the starting material with an alkali followed by the washing with an acid to remove the alkali that is adhered.

The clay treated with the acid, which is used as the starting material, is produced by acid-treating the clay under known conditions.

The clay comprising chiefly the dioctahedral smectite is considered to be the one resulting from a volcanic rock or lava that has underwent metamorphism under the influence of sea water, and has a basic structure of unit layers comprising an SiO₄ tetrahedral sheet - an AlO₆ octahedral sheet - an SiO₄ tetrahedral sheet. Aluminum in the octahedral sheet of the basic structure is partly substituted by Mg or Fe^{(II)} and Silicon in the tetrahedral sheet is partly isomorphously substituted by aluminum and, therefore, the unit layers have a negative electric charge being neutralized with metal cations such as Ca, K, Na and the like and hydrogen ions present among the laminate of unit layers. Examples of the smectite clay may include acid clay, bentonite and fuller's earth, exhibiting different properties depending upon the kinds and amounts of cations and the amount of hydrogen ions present among the layers. For example, the bentonite contains much Na ions among the basic layers. When suspended in water, therefore, the dispersed solution thereof exhibits a high pH value which is, usually, on the highly alkaline side. Further, the bentonite highly swells with water, and is gelled and solidified. The acid clay, on the other hand, contains much hydrogen ions present among the unit layers that are laminated. Therefore, the dispersed solution of when the acid clay is suspended in water exhibits a low pH value which is, usually, on the acidic side. The acid clay swells with water but not so much as the bentonite and, therefore, is not gelled.

Various mineral acids can be used for acid-treating the dioctahedral smectite clay. Preferably, however, sulfuric acid is used since it is easily available and makes it possible to quickly conduct the acid-treatment without giving such a load as corrosion due to acid to the apparatus.

Through the acid-treatment, the Al component and the Fe component in the clay are partly removed, and amorphous silica is formed accompanying the above removal. At the same time, the porous volume and the specific surface area increase, and the amount of the solid acid decreases.

The obtained acid-treated product is filtered, washed with water, dried as required and is, thereafter, used as a starting material of the active clay of the invention.

The active clay of the invention is obtained by treating the acid-treated product of the smectite clay (that corresponds to the conventional active clay) with an alkali followed by washing with an acid. In particular, the acid-treated product used as the starting material has a porous volume of 0.40 to 0.60 cm³/g with porous sizes (porous diameters) of 1.7 to 100 nm as measured by the nitrogen adsorption method, and an amount of solid acid of Ho ≦ -3.0 in a range of 0.15 to 0.40 mmols/g. That is, the above alkali-treatment and the washing with an acid are for increasing the pores of large sizes without decreasing the amount of the solid acid, but basically are not for increasing the porous volume or for increasing the amount of the solid acid.

The acid-treated product having the above porous volume and the amount of solid acid is obtained by adjusting the acid-treating conditions (e.g., acid concentration, time for treatment with acid, etc.) depending upon the composition of the starting clay by utilizing the fact that the porous volume can be increased and the amount of the solid acid can be decreased by the acid-treatment.

Further, the BET specific surface area is increased by the acid-treatment. Therefore, the above acid-treated product has a BET specific area usually in a range of 250 m²/g or larger.

Further, through the acid-treatment for obtaining the above porous volume and the amount of the solid acid, there are formed pores of small sizes and pores of large sizes, the porous volume ratio (B/A) of the porous volume (A) with porous sizes of 1.7 to 11.5 nm and the porous volume (B) with porous sizes of larger than 11.5 nm but not larger than 100 nm being in a range of not larger than 0.70, i.e., there are much formed pores of small diameters.

Here, if the decolorizing performance is taken into consideration, the pores of large sizes contribute to adsorbing large coloring matter molecules such as chlorophyll. Therefore, the above acid-treated product (i.e., conventional active clay) having little pores of large sizes is still unsatisfactory concerning the decolorizing performance. According to the present invention, therefore, it is attempted to increase the pores of large sizes relying upon the treatment with an alkali and the washing with an acid as described below without decreasing the amount of the solid acid.

According to the present invention, the above acid-treated product is treated with an alkaline in order to increase the pores having large sizes. That is, though the alkali-treatment does not almost cause a change in the porous volume of the sizes of 1.7 to 100 nm in the above acid-treated product, silica constituting smaller pores dissolves in the amorphous silica (silica formed on the surfaces of the clay particles as a result of acid-treating the starting clay) that is contained in the acid-treated product causing an increase in the amount of pores of large sizes and, at the same time, causing small pores to be closed. As a result, the above porous volume ratio (B/A) increases. Further, as the silica present on the surfaces undergoes dissolution and desorption, rugged surfaces of the particles are flattened and the specific area decreases.

Further, the solid acid contained in the acid-treated product is neutralized by the alkali-treatment. Therefore, upon effecting the washing with the acid after the treatment with the alkali to thereby remove the alkali that is neutralizing the solid acid, the amount of the solid acid recovers to a degree comparable to that of the starting smectite treated with the acid.

In the present invention, the alkali-treatment is conducted by using an alkaline aqueous solution such as of sodium hydroxide, potassium hydroxide or calcium hydroxide, and mixing and stirring the alkaline aqueous solution and the acid-treated smectite. However, if the alkali-treatment is excessively conducted, the amorphous silica elutes out excessively. Here, if the amorphous silica is all removed, the treated product returns to the starting smectite clay to be acid-treated, and the pores extinguish. Therefore, the alkali-treatment must be conducted to a suitable degree, i.e., to a degree that the above porous volume ratio (B/A) is brought about while maintaining the porous volume of the acid-treated product within the above-mentioned range. The concrete conditions differ depending upon the composition of the acid-treated product (e.g., degree of acid-treatment, etc.) and cannot be definitely specified. Usually, however, the alkali-treatment is conducted by adding an alkaline aqueous solution to an aqueous suspension of the acid-treated product of a suspension concentration of about 10 to about 25% by weight, followed by heating so that the pH value becomes about 7 to about 11.

After the alkali-treatment, the washing is conducted with the acid to a degree to remove the alkali that is neutralizing the solid acid. Namely, the alkali-treated product is washed with, for example, a shower of dilute sulfuric acid of about 0.1 to 1.0% by weight.

Washing with the acid is followed by washing with water and drying and, as required, by firing and particle size adjustment to obtain the desired active clay of the present invention.

### <Active clay>

The above-mentioned active clay is obtained from the acid-treated smectite clay, and, usually, has the following composition calculated as the oxides.
SiO₂: 65 to 85% by weight
Al₂O₃: 6 to 12% by weight
Fe₂O₃ : 1 to 8% by weight
MgO: 1 to 3% by weight
CaO: 0.1 to 2% by weight
Na₂O: 0.1 to 1% by weight
K₂O : 0.1 to 1% by weight
Other oxides (TiO₂, etc.): 1% by weight or less
Ig-loss (1050°C): 4 to 8% by weight

Further, the active clay has a porous volume of 0.40 to 0.60 cm³/g with porous sizes (porous diameters) of 1.7 to 100 nm as measured by the nitrogen adsorption method, which is nearly comparable to that of the acid-treated product of the smectite clay used as the starting material and, further, has an amount of solid acid of Ho ≦ -3.0 in a range of 0.15 to 0.40 mmols/g and, preferably, 0.18 to 0.35 mmols/g, which, also, is nearly comparable to that of the acid-treated product of the smectite clay used as the starting material.

Through the alkali-treatment, further, the pores of large sizes are increasing. As a result, the porous volume ratio (B/A) of the porous volume (A) with porous sizes of 1.7 to 11.5 nm and the porous volume (B) with porous sizes of lager than 11.5 nm but not larger than 100 nm lies in a range of 0.75 to 1.5 and, preferably, 0.8 to 1.4.

That is, upon having the above porous volume ratio (B/A), having increased number of pores of large sizes and having the above amount of the solid acid, the active clay features improved adsorption performance based on the pores and improved adsorption performance based on the solid acid, high performance for adsorbing macromolecules of coloring matter such as chlorophylls, and exhibits very favorable properties as the decolorizing agent for animal and plant fats and oils as well as for mineral oils.

Due to the alkali-treatment, further, the BET specific surface area is becoming smaller than that of the acid-treated product of the starting smectite clay; i.e., the BET specific surface area is in a range of 150 to 300 m²/g and, preferably, 150 to 250 m²/g. In this case, it is desired that the treatment with the alkali is conducted to such a degree that the BET specific surface area is maintained to lie at least in the above range. If the BET specific surface area becomes lower than the above range, the field necessary for the adsorption decreases resulting in a decrease in the performance for adsorbing coloring matter molecules and in a decrease in the decolorizing performance.

Due to the washing with the acid, the active clay obtained as described above is devoid of the alkali component that neutralizes the solid acid and, therefore, exhibits pH (25°C) in a range of 2.5 to 5. 0 in an aqueous suspension of 5% by weight.

As described above, the active clay of the invention exhibits markedly improved performance for adsorbing macromolecules of coloring matter as compared to the conventional active clays, and can be favorably used as a decolorizing agent for animal and plant fats and oils as well as for mineral oils.

As the animal and plant fats and oils to be decolorized, there can be exemplified at least one kind of animal and plant fats and oils and mineral oils. The starting fats and oils chiefly comprise fatty acid and ester of glycerin that are ubiquitously present in the natural animal and plant worlds. For example, there can be exemplified plant fats and oils such as safflower oil, soybean oil, rape oil, palm oil, palm kernel oil, safflower oil, cotton seed oil, coconut oil, rice bran oil, sesame oil, castor oil, linseed oil, olive coil, tung oil, tsubaki oil, peanut oil, kapok oil, cacao oil, Japan wax, sunflower oil and corn oil; fish oils such as sardine oil, herring oil, squid oil and mackerel oil; and animal fats and oils such as liver oil, whale oil, beef tallow, butterfat, horse oil, lard and mutton tallow, which may be treated in a single kind or in combination.

As the mineral oils, on the other hand, there can be exemplified various lubricating oils such as spindle oil, refrigerator oil, dynamo oil, turbine oil, machine oil, lubricating oil for internal combustion engines of ships, lubricating oil for gasoline engines, lubricating oil for diesel engines, cylinder oil, marine engine oil, gear oil, cutting oil, insulating oil, automatic transmission oil, compressor oil, hydraulic operation oil and rolling oil.

The decolorizing treatment is conducted by adding a powder of the active clay of the invention adjusted to a suitable particle size (usually, a median size of about 18 to about 30 µm on the volume basis as measured by the laser diffraction method) to the fat or oil or the mineral oil from which the color is to be removed, by homogeneously stirring the two so that the clay particles adsorb coloring components and impurity components contained in the fat, oil or mineral oil to thereby effect the decolorization.

The treatment for decolorizing the animal and plant fats and oils as well as mineral oils is conducted under the conditions known per se., such as adding the decolorizing agent in an amount of not larger than 5% on the weight basis per the fat, oil or mineral oil, and stirring the composition of the two at a temperature of 90 to 150°C for 5 to 30 minutes to complete the decolorizing treatment.

The mixture after the decolorizing treatment is fed to any filter, i.e., a reduced-pressure or elevated-pressure filter such as filter press, belt filter, Oliver filter, American filter or centrifugal filter to separate it into the decolorized fat, oil or mineral oil and the used decolorizing agent or the so-called waste clay.

The active clay of the invention can be used not only as the decolorizing agent for animal and plant fats and oils or mineral oils but also for refining aromatic hydrocarbons such as BTX (benzene, toluene, xylene). It is, further, allowable to attach aluminum sulfate or aluminum chloride to the active clay of the present invention.

### EXAMPLES

The invention will now be described by way of the following Examples. In Examples, measurements were taken by the methods described below.

### (1) Amount of the solid acid (A)

The amount of the solid acid of Ho ≦ -3.0 was measured relying on the n-butylamine titration method. The sample used for the measurement had been dried in advance at 150°C for 3 hours.
[reference document: "Catalyst" Vol. 11, No. 6, pp. 210-216 (1969)]

### (2) Porous volumes and porous volume ratio

Measurement was taken by the nitrogen adsorption method by using the Tri Star 3000 manufactured by Micromeritics Co., and the porous volumes were found with the porous diameters of 1.7 up to 100 nm from the adsorption data relying on the BJH method.
Further, the porous volume ratio was found from the ratio (B/A) of the porous volume (A) with the porous diameters of 1.7 to 11.5 nm and the porous volume (B) with the porous diameters of larger than 11.5 nm but not larger than 100 nm.

### (3) Pore distribution

Measurement was taken by the nitrogen adsorption method by using the Tri Star 3000 manufactured by Micromeritics Co., and the porous distribution was found from the adsorption data relying on the BJH method.

### (4) BET specific surface area

Measured by the nitrogen adsorption method by using the Tri Star 3000 manufactured by Micromeritics Co., and was analyzed relying on the BET method.

### (5) Median size (D₅₀)

A median size (D₅₀) was measured on the volume basis by the laser diffraction scattering method by using the Mastersizer 2000 manufactured by Malvern Co. and by using water as the solvent.

### (6) pH

An aqueous suspension of 5% by weight was prepared in compliance with the JIS K 5101-17-1:2004, and was measured for its pH value.

### (7) Decolorization testing method

Performance of the decolorizing agent was tested by using a decolorization testing machine illustrated in the drawing of the Clay Handbook, second edition, compiled by the Japanese Academy of Clays (edited by Gihodo Publishing Co.), p. 917.
The decolorization testing machine has eight large test tubes (volume of 200 ml) of a hard glass that can be set in an oil bath. Each test tube contains a wave-shaped stirrer rod having a rounded lower end which is so adjusted by a rubber tube as to come in contact with the bottom of the test tube at all times. The eight stirrer rods are rotated by pinions divided from a central master gear, and their rotational speeds are all maintained equal. Stirrer vanes are attached to the lower side of the central master gear to stirrer the oil bath to thereby maintain the temperature uniform in the oil bath. The decolorization testing can be conducted in any number of up to a maximum of eight. The test tubes are each filled with 50 g of the deoxidized rape oil, and the sample decolorizing agents are added thereto each in an amount of 0.75 g (1.5% relative to the oil) and are mixed well by using stirrer rods for decolorization testing. The test tubes are set to the above decolorization testing machine maintained at 110°C, stirred for 20 minutes, and are taken out from the decoloration testing machine. The mixed suspensions of oils and decolorizing agents are filtered to obtain the decolorized oils.
The decolorized oils are measured for their white light transmission factors (relative values of when the transmission factor of distilled water is set to be 100%) by using a photoelectric colorimeter, Model 2C, manufactured by Hirama Rika Kenkyujo Co., and the obtained numerical values are used for representing the decolorization performances of the decolorizing agents. The higher the value of the transmission factor, the higher the decolorizing performance of the decolorizing agent that is used.

### (Comparative Example 1)

A smectite clay produced in Tainai City, Niigata Prefecture, was used as the starting material, and was coarsely milled, kneaded and was granulated into a size of 5 mm. The obtained granulated material contained water in an amount of 37%.
1500 Grams of the granulated material was charged into a treating vessel, and 2000 ml of an aqueous solution containing 35% by weight of sulfuric acid was circulated therein to conduct the acid-treatment. The treating temperature at this time was 90°C and the treating time was 7 hours. After the acid-treatment has been finished, washing water was circulated into the acid-treated product to effect the washing with water followed by drying at 110°C, milling and classification to obtain a powdery active clay.
The obtained powdery active clay was measured for its properties to obtain the results as shown in Table 2.

### (Example 1)

The acid-treated product after washed with water (water-containing product before drying) used in Comparative Example 1 was used as the starting material. Water was added to the acid-treated product which was, thereafter, milled by using a household mixer to obtain an aqueous suspension containing the solid component at a concentration of 20% by weight.
To 1250 g of the suspension, 66 g of an aqueous solution containing 7.5% by weight of NaOH was added and stirred at 90°C for 5 hours to effect the alkali-treatment. The suspension was filtered, and the filtered cake was dispersed in diluted sulfuric acid of 1% by weight to effect the washing with the acid by decantation method, followed by washing with water.
The suspension after washed with water was filtered, and the filtered cake was dried at 110°C, milled and classified to obtain a powdery active clay.
The obtained powdery active clay was measured for its properties to obtain the results as shown in Table 1.
The pore distribution of the sample is shown in Fig. 1 in comparison with that of the sample of Comparative Example 1. It will be learned from Fig. 1 that the pores of pore diameters of about 5 nm are changing into pores of diameters of not smaller than 10 nm through the alkali-treatment.

### (Example 2)

A powdery active clay was obtained in the same manner as in Example 1 but using 50 g of an aqueous solution containing 7.5% by weight of NaOH instead of using 66 g of the aqueous solution containing 7.5% by weight of NaOH. The obtained powdery active clay was measured for its properties to obtain the results as shown in Table 1.

### (Example 3)

A powdery active clay was obtained in the same manner as in Example 1 but using 98 g of an aqueous solution containing 7.5% by weight of NaOH instead of using 66 g of the aqueous solution containing 7.5% by weight of NaOH. The obtained powdery active clay was measured for its properties to obtain the results as shown in Table 1.

### (Example 4)

A powdery active clay was obtained in the same manner as in Example 1 but using 66 g of a suspension containing 7.0% by weight of Ca(OH)₂ instead of using 66 g of the aqueous solution containing 7.5% by weight of NaOH. The obtained powdery active clay was measured for its properties to obtain the results as shown in Table 1.

### (Example 5)

The powdery active clay obtained in Comparative Example 1 was used as the starting material. 250 Grams of the powder was dispersed in 1000 g of an aqueous solution containing 0.5% by weight of NaOH and was stirred at 90°C for 5 hours to effect the alkali-treatment. Thereafter, washing with the acid, washing with water and filtering were conducted in the same manner as in Example 1, and the filtered cake was dried at 110°C to obtain a powdery active clay.
The obtained powdery active clay was measured for its properties to obtain the results as shown in Table 1.

### (Comparative Example 2)

A powdery active clay was obtained in the same manner as in Comparative Example 1 but using an aqueous solution containing 30% by weight of sulfuric acid instead of using the aqueous solution containing 35% by weight of sulfuric acid used in Comparative Example 1, and effecting the acid-treatment at 90°C for 5 hours.
The obtained powdery active clay was measured for its properties to obtain the results as shown in Table 2.

### (Example 6)

A powdery active clay was obtained in the same manner as in Example 1 but using the acid-treated product after washed with water (water-containing product before drying) used in Comparative Example 2 as the starting material.
The obtained powdery active clay was measured for its properties to obtain the results as shown in Table 1.

### (Comparative Example 3)

A powdery active clay was obtained in the same manner as in Comparative Example 1 but using an aqueous solution containing 45% by weight of sulfuric acid instead of using the aqueous solution containing 35% by weight of sulfuric acid used in Comparative Example 1, and effecting the treatment with the acid at 90°C for 12 hours.
The obtained powdery active clay was measured for its properties to obtain the results as shown in Table 2.

### (Comparative Example 4)

The same smectite clay as the one used in Comparative Example 1 was dispersed in water, and coarse particles were removed by hydraulic elutriation followed by filtration and drying at 110°C. 920 Grams of an aqueous solution containing 15% by weight of sulfuric acid was introduced into a beaker, and 360 g of the dry clay was added thereto and was treated with the acid with stirring on a heater at 70°C for 12 hours.
After the acid-treatment has been finished, water was added to the acid-treated product to effect the washing by the decantation method followed by filtering. The filtered cake was dried at 110°C, milled and classified to obtain a powdery active clay.
The obtained powdery active clay was measured for its properties to obtain the results as shown in Table 2.

### (Comparative Example 5)

The alkali-treatment was effected in the same manner as in Example 1. The suspension after alkali-treated was filtered, and the filtered cake was dispersed in water to wash it with water by the decantation method (omitting the washing with 1% sulfuric acid of Example 1). Thereafter, a powdery active clay was obtained in the same manner as in Example 1.
The obtained powdery active clay was measured for its properties to obtain the results as shown in Table 2.

**Table 1**

| | Ex. 1 | Ex. 2 | Ex. 3 | Ex. 4 | Ex. 5 | Ex. 6 |
|---|---|---|---|---|---|---|
| Porous volume (cm³/g) | | | | | | |
| 1.7 - 100nm | 0.474 | 0.491 | 0.465 | 0.477 | 0.475 | 0.417 |
| 1.7 - 11.5nm (A) | 0.218 | 0.273 | 0.199 | 0.210 | 0.223 | 0.208 |
| 11.5 - 100nm (B) | 0.256 | 0.218 | 0.266 | 0.268 | 0.256 | 0.209 |
| Porous volume ratio (B/A) | 1.17 | 0.80 | 1.34 | 1.28 | 1.15 | 1.00 |
| Amount of solid acid (mmol/g) | 0.20 | 0.21 | 0.19 | 0.21 | 0.22 | 0.32 |
| BET specific surface area (m²/g) | 198 | 233 | 189 | 192 | 203 | 202 |
| Median size (D₅₀) (µm) | 18.5 | 21.0 | 19.5 | 21.5 | 22.5 | 22.0 |
| pH (5 wt% aq. suspension) | 3.4 | 2.8 | 4.2 | 3.3 | 3.4 | 3.7 |
| Decolorization testing | 55.4 | 56.3 | 54.8 | 56.9 | 56.6 | 53.8 |

**Table 2**

| | Comp. Ex. 1 | Comp. Ex. 2 | Comp. Ex. 3 | Comp. Ex. 4 | Comp. Ex. 5 |
|---|---|---|---|---|---|
| Porous volume (cm³/g) | | | | | |
| 1.7 - 100nm | 0.487 | 0.421 | 0.580 | 0.253 | 0.435 |
| 1.7 - 11.5nm (A) | 0.325 | 0.264 | 0.264 | 0.191 | 0.193 |
| 11.5 - 100nm (B) | 0.162 | 0.158 | 0.316 | 0.062 | 0.242 |
| Porous volume ratio (B/A) | 0.50 | 0.60 | 1.20 | 0.32 | 1.25 |
| Amount of solid acid (mmol/g) | 0.22 | 0.31 | 0.02 | 0.50 | 0.11 |
| BET specific surface area (m²/g) | 299 | 261 | 229 | 286 | 195 |
| Median size (D₅₀) (µm) | 19.6 | 21.8 | 20.0 | 23.2 | 19.8 |
| pH (5 wt% aq. suspension) | 3.2 | 3.3 | 3.4 | 3.8 | 6.6 |
| Decolorization testing | 53.0 | 49.0 | 7.7 | 25.2 | 26.5 |

## Claims

1. An active clay having a porous volume of 0.40 to 0.60 cm³/g with porous sizes of 1.7 to 100 nm as measured by the nitrogen adsorption method, a porous volume ratio (B/A) of the porous volume (A) with porous sizes of 1.7 to 11.5 nm and the porous volume (B) with porous sizes of larger than 11.5 nm but not larger than 100 nm in a range of 0.75 to 1.5, and an amount of solid acid of Ho ≦ -3.0 in a range of 0.15 to 0.40 mmols/g.

2. The active clay according to claim 1, wherein the active clay has pH (25°C) in a range of 2.5 to 5.0 in an aqueous suspension of 5% by weight.

3. The active clay according to claim 1, wherein the active clay has a BET specific surface area of 150 to 300 m²/g.

4. A decolorizing agent for animal and plant fats and oils or for mineral oils, comprising the active clay of claim 1.
